# EUROPÄISCHE PATENTSCHRIFT

(11) **EP 1 644 236 B1**
(45) Veröffentlichungstag und Bekanntmachung des Hinweises auf die Patenterteilung: **22.11.2006**
(21) Anmeldenummer: 04763196.5
(22) Anmeldetag: 13.07.2004
(51) Int. Cl.: B62B 13/16

(54) **KLAPPSCHLITTEN**
FOLDING SLED
LUGE PLIANTE

(30) Priorität: 14.07.2003 DE 10331991
(43) Veröffentlichungstag der Anmeldung: 12.04.2006
(73) Patentinhaber: Scheib, Rudi, 89081 Ulm (DE)
(72) Erfinder: Scheib, Rudi, 89081 Ulm (DE)
(74) Vertreter: Koepe, Gerd L.
(86) Internationale Anmeldenummer: PCT/EP2004/007735
(87) Internationale Veröffentlichungsnummer: WO 2005/005224

(56) Entgegenhaltungen:
- DE-U1- 8 517 785
- DE-U1- 8 701 352
- US-A- 1 070 915

## Beschreibung

Die Erfindung betrifft einen Klappschlitten mit zwei seitlichen, jeweils eine Kufe und eine Sitzleiste umfassende Schlittenrahmen, die zueinander geneigt angeordnet und durch einen Sitz und zwei Querstreben gekoppelt sind, die um eine rechte Drehachse und eine linke Drehachse drehbar mit dem Schlittenrahmen verbunden sind und ein Scharnier mit einer Scharnierachse aufweisen, wobei die einer Querstrebe zugehörige rechte Drehachse und linke Drehachse in einer Ebene liegen.

Klappschlitten sind aus dem Stand der Technik seit langem bekannt und bei den Kunden beliebt, da die Klappschlitten Platz sowohl beim Transport als auch bei der Aufbewahrung sparen. Ein Klappschlitten der Eingangs genannten Art ist in der US 1 070 915 beschrieben, der in der Handhabung jedoch Nachteile aufweist, weil die beiden über die zwei Querstreben verbundenen Schlittenrahmen nach Art eines Parallelogramms relativ zueinander verschoben werden können und daher der Klappschlitten weiterer Versteifungsstreben bedarf, die diagonal unter der Sitzfläche verlaufend die vordere Drehachse des einen Schlittenrahmens mit der hinteren Drehachse des anderen Schlittenrahmens verbinden und so die für den Einsatz erforderliche Stabilität des Klappschlittens bereit stellen. Zum Zusammenklappen des Klappschlittens muss die Verbindung der Diagonalstreben mit den Schlittenrahmen gelöst und für den Gebrauch des Klappschlittens wieder hergestellt werden. Dies ist nachteilig für die Handhabung; zu dem wird durch die zwingend erforderlichen Diagonalstreben die Herstellung des Klappschlittens verteuert.

Der Erfindung liegt daher die Aufgabe zugrunde, einen Klappschlitten der Eingangs genannten Art so auszubilden, dass dessen Stabilität ohne die Notwendigkeit des Einsatzes zusätzlicher Bauteile erhöht ist.

Diese Aufgabe wird nach der Erfindung bei einem Klappschlitten der Eingangs genannten Art dadurch gelöst, dass die jeweils einem Schlittenrahmen zugeordneten Drehachsen nicht parallel zueinander orientiert sind.

Durch diese überraschend einfache Gestaltung mit geneigt zueinander orientierten Drehachsen wird wirksam verhindert, dass die beiden Schlittenrahmen relativ zueinander in Längsrichtung des Klappschlittens verschoben werden können, so dass die bei dem vorbekannten Klappschlitten grundsätzlich mögliche Parallelverschiebung der Schlittenrahmen und der Querstreben wirksam unterbunden ist. Dies wird unmittelbar einsichtig durch die Überlegung, dass die Verstellung des einen Schlittenrahmens gegenüber dem anderen eine Verdrehung der Querstreben um ihre Drehachsen erfordert, die aber gerade nicht möglich ist, da keine gemeinsame Drehachse für eine derartige Bewegung zur Verfügung steht, sondern die fehlende Parallelität der Drehachsen eines Schlittenrahmens bewirkt, dass diese Längsverschiebungen des einen Schlittenrahmens gegenüber dem anderen Schlittenrahmen wirksam blockiert ist. Vorteilhaft im Sinne einer Erhöhung der Stabilität durch Ausschluß jeglichen Spiels ist es, wenn keine Drehachse parallel zu einer der anderen Drehachsen orientiert ist.

Nach einem besonders bevorzugten Ausführungsform der Erfindung ist vorgesehen, dass die linken Drehachsen bzw. die rechten Drehachse in einer Ebene liegen und' geneigt zueinander verlaufen. Durch diese Ausgestaltung wird besonders in einfacher Weise das Kriterium erfüllt, dass keine Drehachse parallel zu einer der anderen Drehachse orientiert ist, wobei sich dies bezüglich des vorstehenden Merkmals durch die eingangs getroffene Feststellung ergibt, dass auch die Schlittenrahmen zueinander geneigt verlaufen. Dabei ist es im Rahmen der Erfmdung beliebig, ob die Sitzleisten im aufgeklappten Zustand des Klappschlittens einen größeren oder einen kleineren Abstand als die Kufen aufweisen, und ob die einem Schlittenrahmen zugeordneten Drehachsen kufenseitig einen größeren oder einen kleineren Abstand aufweisen als an der Sitzleiste.

Im Sinne einer hohen Stabilität des Klappschlittens ist dabei bevorzugt, wenn die linken Drehachsen bzw die rechten Drehachsen in der Ebene des Schlittenrahmens einen Winkel zwischen 40° und 140° einschließen, da in diesem Winkelintervall die Selbsthemmung gegen Parallelverschiebungen besonders ausgeprägt ist.

Klappschlitten der vorstehend geschilderten Art zeichnen sich durch eine hohe Stabilität im aufgeklappten Zustand aus. Jedoch läßt sich die Betriebssicherheit noch steigern, wenn Mittel zur Arretierung der Drehlage der Drehachsen und/oder der Scharnierachse mindestens einer der Querstreben im aufgeklappten Zustand vorgesehen sind, um so auch bei schweren Erschütterungen des Klappschlittens während des Rodelbetriebes ausreichend Sicherheitsreserven zu besitzen. Zweckmäßigerweise sind die Mittel zur Arretierung durch den aus zwei starren Sitzhälften bestehenden Sitz gebildet, die gelenkig, an den Sitzleisten angeschlossen und über ein parallel zur Längsrichtung des Schlittenrahmens orientiertes Sitzscharnier verbunden sind. Dieser aus zwei starren Sitzhälften gebildete Sitz verhindert eine Annäherung der beiden Sitzleisten des Klappschlittens im aufgeklappten Zustand, wobei zu beachten ist, dass das Sitzscharnier im wesentlichen senkrecht zu den Drehachsen orientiert ist und damit zu einer Drehung anders wirkende Drehmomente erforderlich sind als für die Verdrehung um die Scharnierachse der Querstreben.

Günstig ist weiterhin, wenn die Mittel zur Arretierung Schnappverbindungen bzw. Klemmverbindungen umfassen, die eine Drehung der über die Drehachsen oder die Scharnierachsen gelenkig miteinander gekoppelten Schlittenteile formschlüssig verhindern, wobei diese Ausführungsform sich insbesondere dann anbietet, wenn der Sitz durch ein Tuch gebildet ist, das einen konstanten Abstand der Sitzleisten im aufgeklappten Zustand nicht gewährleistet.

Alternativ besteht auch die Möglichkeit, dass die Mittel zur Arretierung ein Federelement umfassen, das einer Drehung der über die Drehachsen oder die Scharnierachsen gelenkig miteinander gekoppelten Schlittenteile kraftschlüssig entgegenwirkt.

Dabei ist dann bevorzugt, dass die Scharnierachse einer der Querstreben parallel zu und außerhalb der durch die zugehörigen Drehachsen definierten Ebene liegt, dass auf der der Scharnierachse gegenüber liegenden Seite der Ebene das Federelement angeordnet und mit den beiden Teilen der Querstrebe an Kontaktstellen verbunden ist, und dass zwischen den Kontaktstellen Freischneidungen in den beiden Teilen der Querstrebe ausgebildet sind. Bei dieser Gestaltung wirkt das Federelement einem Verdrehen der beiden Teile der Querstrebung um die Scharnierachse entgegen, da dies mit einem Spannen des Federelementes verbunden ist, das nach einem Überschreiten seiner maximalen Auslenkung jedoch in die Freischneidungen der beiden Teile der Querstreben eintreten kann und so ein Beharren des Klappschlittens in einer seiner beiden stabilen Konfigurationen dient, weil im zusammengeklappten Zustand des Klappschlittens das Federelement in den Freischneidungen geringer gespannt ist.

Zur Erhöhung der Stabilität und Belastbarkeit des Schlittens ist vorgesehen, dass die Querstreben im aufgeklappten Zustand dem Sitz unterstützend anliegen.

Um im zusammengeklappten Zustand einen möglichst geringen Platzbedarf für den Schlitten zu benötigen, ist vorgesehen, dass im zusammengeklappten Zustand die Sitzhälften zwischen den Teilen der Querstreben liegen, was sich in einfacherweise realisieren läßt, da die beiden Teile der Querstreben bei ihrer parallelen Ausrichtung einen gegenseitigen Abstand aufweisen aufgrund der Lage der Scharnierachse außerhalb der Ebene, die durch die zugehörigen Drehachsen definiert ist.

Damit der Klappschlitten im zusammengeklappten Zustand möglichst wenig Platz beansprucht und auf in dem Sinnen belastbar ist, daß ohne Beschädigungen zumindest geringe Lasten darauf abgestellt werden können, ist vorgesehen, daß die Sitzleisten auf der Innenseite Aussparungen aufweisen, die mit dem darin aufgenommenen Sitz im zusammengeklappten Zustand eine gegenseitige Anlage der Schlittenrahmen ermöglichen.

Im Rahmen der Erfindung ganz besonders bevorzugt ist, dass die Schlittenrahmen/und oder die Querstreben aus Kunststoff bestehen, da so die Schlittenrahmen in sehr kostengünstiger Weise mit den üblichen Verfahren zur Bearbeitung von Kunststoff wie beispielsweise Spritzgießen oder Extrusionsblasen hergestellt werden können.

Im folgenden wird die Erfindung anhand der in der Zeichnung dargestellten Ausführungsbeispielen näher erläutert; es zeigen:
- Fig.1: einen erfindungsgemäßen Klappschlitten in einer Seitenansicht im zusammengeklappten Zustand,
- Fig. 2: den Schnitt II-II aus Fig. 1 bei einem Klappschlitten im aufgeklappten Zustand,
- Fig. 3: eine der Fig. 2 entsprechende Darstellung bei einem Klappschlitten mit aus zwei starren Sitzhälften gebildeten Sitz,
- Fig. 4: eine der Fig. 3 entsprechenden Darstellung einer alternativen Ausführungsform mit gegenüber Fig. 2 anderen Mitteln zur Arretierung der Drehlage der Schanierachse,
- Fig. 5: eine Draufsicht auf eine Querstrebe mit außerhalb der durch die zugehörigen Drehachsen definierten Ebene liegender Scharnierachse, und
- Fig.6: eine der Fig. 3 entsprechende Darstellung des Klappschlittens im zusammengeklappten Zustand.

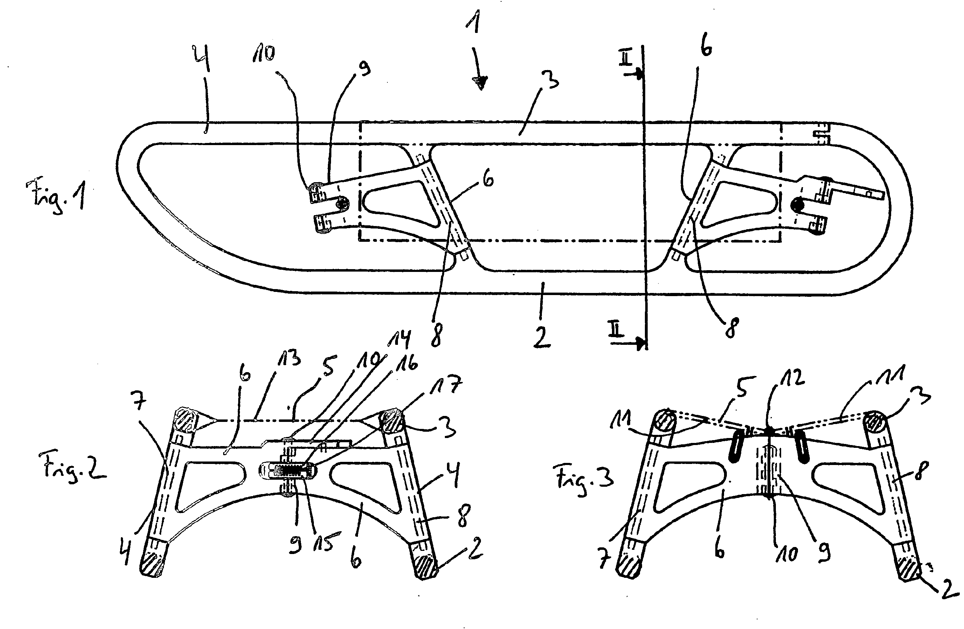

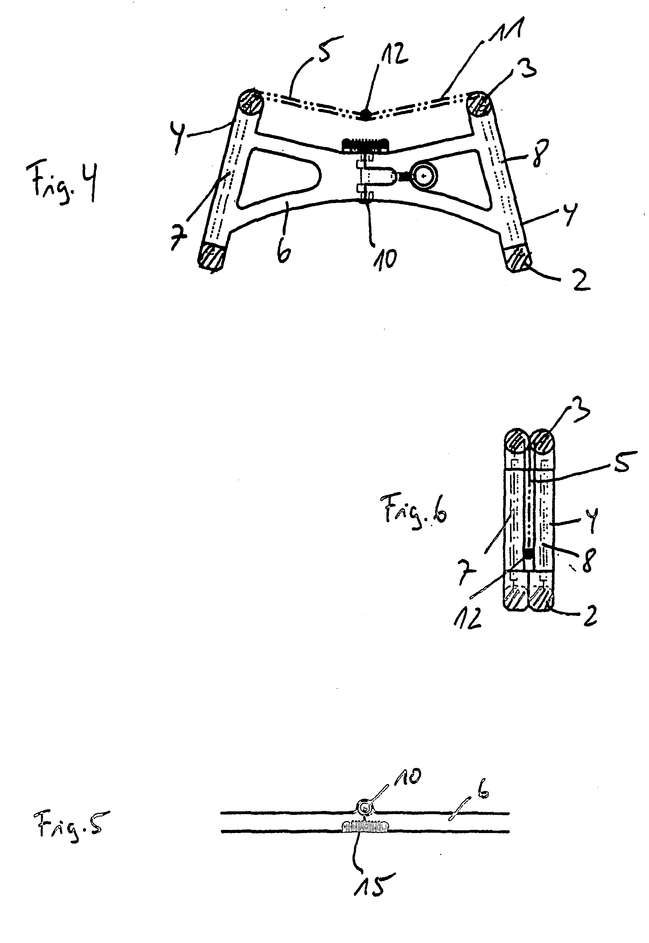

In der Fig. 1 dargestellt ist ein Klappschlitten 1, der aus zwei seitlichen, jeweils eine Kufe 2 und eine Sitzleiste 3 umfassende Schlittenrahmen 4 besteht, die durch einen Sitz 5 und zwei Querstreben 6 miteinander gekoppelt sind. Die beiden Schlittenrahmen 4 sind, wie unmittelbar aus Fig. 2 und Fig. 3 sowie Fig. 4 ersichtlich, zueinander geneigt angeordnet, wobei bei den in der Zeichnung dargestellten Ausführungsbeispielen der Abstand der Sitzleisten 3 im aufgeklappten Zustand des Klappschlittens 1 geringer als der Abstand der Kufen 2 ist. Die Querstreben 6 sind jeweils um eine rechte Drehachse 7 und eine linke Drehachse 8 drehbar mit den beiden Schlittenrahmen 4 verbunden und weisen ein Scharnier 9 mit einer Scharnierachse 10 auf, wobei die einer Querstrebe 6 zugehörige rechte Drehachse 7 und linke Drehachse 8 in einer Ebene liegen.

Fig. 2 in Verbindung mit Fig. 1 läßt erkennen, dass die linken Drehachsen 8 bzw. die rechten Drehachsen 7 der beiden Schlittenrahmen 4 in einer Ebene liegen und geneigt mit einem Neigungswinkel von ca. 90° zueinander verlaufen, so dass im Ergebnis die Drehachsen 7 bzw. 8 eines Schlittenrahmen 4 nicht parallel zueinander orientiert sind und in den gezeigten Ausführungsbeispielen auch keine Drehachse 7, 8 parallel zu einer der anderen beider Schlittenrahmen Drehachse 7, 8 orientiert ist und eine Längsverschiebung des einen Schlittenrahmens 4 in Längsrichtung des Klappschlittens 1 relativ zum anderen Schlittenrahmen 4 nach Art einer Parallelogrammverschiebung unterbunden ist, und zwar ohne die Notwendigkeit, zusätzliche Streben zwischen den beiden Schlittenrahmen 4 zu spannen.

Bei den in der Zeichnung dargestellten Ausführungsbeispielen sind weiterhin Mittel zur Arretierung der Drehlage der Scharnierachse 10 mindestens einer der Querstreben 6 im aufgeklappten Zustand vorgesehen, wobei bei der in der Fig. 3 dargestellten Ausführungsform die Mittel zur Arretierung durch den aus zwei starren Sitzhälften 11 bestehenden Sitz 5 gebildet sind, die gelenkig an den Sitzleisten 3 angeschlossen und über einen parallel zur Längsrichtung der Schlittenrahmen 4 orientiertes Sitzscharnier 12 verbunden sind. Fig. 2 zeigt demgegenüber eine Ausführungsform, bei der der Sitz durch ein Sitztuch 13 gebildet ist und die Mittel zur Arretierung eine Schnappverbindung 14 umfassen, die eine Drehung der über die Drehachsen 7, 8 oder die Scharnierachse 10 gelenkig miteinander gekoppelten Schlittenteile formschlüssig verhindern, bei dem gezeigten Ausführungsbeispiel aus Fig. 2 eine Drehung der beiden Teile der Querstreben 6 um die Scharnierachse 10. Zusätzlich umfassen die Mittel zur Arretierung ein Federelement 15, das einer Drehung der über die Scharnierachse 10 gelenkig miteinander gekoppelten Teile der Querstrebe 6 kraftschlüssig entgegen wirkt. Dabei ist darauf hinzuweisen, dass die Scharnierachse 10 einer der Querstreben 6 parallel zu und außerhalb der durch die zugehörigen Drehachsen 7, 8 definierten Ebene liegt, wobei auf der der Scharnierachse 10 gegenüberliegenden Seite der Ebene das Federelement 15 angeordnet und mit den beiden Teilen der Querstrebe 6 an Kontaktstellen 17 verbunden ist, zwischen den Freischneidungen 16 in den beiden Teilen der Querstrebe 6 ausgebildet sind, so dass das Federelement 15 im aufgeklappten Zustand des Klappschlittens 1 dessen Zusammenklappen entgegenwirkt, da es dazu gespannt werden muss, wobei das Federelement 15 sich aber im zusammengeklappten Zusand des Klappschlittens 1 wieder entspannt, und so insgesamt einer Stabilisierung der beiden Betriebszustände des Klappschlittens 1 dient.

Fig. 6 zeigt, dass im zusammengeklappten Zustand die Sitzhälften 11 zwischen den Teilen der Querstreben 6 liegen, was sich problemlos realisieren läßt, da die beiden Teile der Querstreben 6 im zusammengeklappten Zustand in parallel zueinander ausgerichteter Konfiguration einen gegenseitigen Abstand aufweisen, weil die Scharnierachse 10 außerhalb der durch die beiden zugehörigen Drehachsen 7, 8 definierten Ebene liegt. Fig. 6 läßt auch erkennen, daß die Schlittenrahmen 4 einander zur Anlage gelangen, da der Sitz 5 in Aussparungen der Sitzleisten 3 aufgenommen ist.

## Patentansprüche

1. Klappschlitten mit zwei seitlichen, jeweils eine Kufe (2) und eine Sitzleiste (3) umfassende Schlittenrahmen (4), die zueinander geneigt angeordnet und durch einen Sitz (5) und zwei Querstreben (6) gekoppelt sind, die um eine rechte Drehachse (7) und eine linke Drehachse (8) drehbar mit den Schlittenrahmen (4) verbunden sind und ein Scharnier (9) mit einer Scharnierachse (10) aufweisen, wobei die einer Querstrebe (6) zugehörige rechte Drehachse (7) und linke Drehachse (8) in einer Ebene liegen, **dadurch gekennzeichnet, daß** die jeweils einem Schlittenrahmen (4) zugeordneten Drehachsen (7 oder 8) nicht parallel zueinander orientiert sind.

2. Klappschlitten nach Anspruch 1, **dadurch gekennzeichnet, dass** keine Drehachse (7, 8) parallel zu einer der anderen Drehachsen (7, 8) orientiert ist.

3. Klappschlitten nach Anspruch 2, **dadurch gekennzeichnet, daß** die linken Drehachsen (8) beziehungsweise die rechten Drehachsen (7) in einer Ebene liegen und geneigt zueinander verlaufen.

4. Klappschlitten nach Anspruch 3, **dadurch gekennzeichnet, daß** die linken Drehachsen (8) beziehungsweise die rechten Drehachsen (7) in der Ebene des Schlittenrahmens (4) einen Winkel zwischen 40° und 140° einschließen.

5. Klappschlitten nach einem der Ansprüche 1 bis 4, **dadurch gekennzeichnet, daß** Mittel zur Arretierung der Drehlage der Drehachsen (7, 8) und/oder der Scharnierachse (10) mindestens einer der Querstreben (6) im aufgeklappten Zustand vorgesehen sind.

6. Klappschlitten nach Anspruch 5, **dadurch gekennzeichnet, daß** die Mittel zur Arretierung durch den aus zwei starren Sitzhälften (11) bestehenden Sitz (5) gebildet sind, die gelenkig an den Sitzleisten (3) angeschlossen und über ein parallel zur Längsrichtung der Schlittenrahmen (4) orientiertes Sitzscharnier (12) verbunden sind.

7. Klappschlitten nach Anspruch 5 oder 6, **dadurch gekennzeichnet, daß** die Mittel zur Arretierung Schnappverbindungen bzw Klemmverbindungen umfassen, die eine Drehung der über die Drehachsen (7, 8) oder die Scharnierachsen (10) gelenkig miteinander gekoppelten Schlittenteile formschlüssig verhindern.

8. Klappschlitten nach einem der Ansprüche 5 bis 7, **dadurch gekennzeichnet, daß** die Mittel zur Arretierung ein Federelement (15) umfassen, das einer Drehung der über die Drehachsen (7, 8) oder die Scharnierachsen (10) gelenkig miteinander gekoppelten Schlittenteile kraftschlüssig entgegenwirkt.

9. Klappschlitten nach Anspruch 8, **dadurch gekennzeichnet, daß** die Scharnierachse (10) einer der Querstreben (6) parallel zu und außerhalb der durch die zugehörigen Drehachsen (7, 8) definierten Ebene liegt, daß auf der der Scharnierachse (10) gegenüber liegenden Seite der Ebene das Federelement (15) angeordnet und mit den beiden Teilen der Querstrebe (6) an Kontaktstellen (17) verbunden ist, und daß zwischen den Kontaktstellen (17) Freischneidungen (16) in den beiden Teilen der Querstrebe (6) ausgebildet sind.

10. Klappschlitten nach einem der Ansprüche 6 bis 9, **dadurch gekennzeichnet, daß** die Querstreben (6) im aufgeklappten Zustand dem Sitz (5) unterstützend anliegen.

11. Klappschlitten nach Anspruch 9 oder 10, **dadurch gekennzeichnet, daß** im zusammengeklappten Zustand die Sitzhälften (11) zwischen den Teilen der Querstreben (6) liegen.

12. Klappschlitten nach einem der Ansprüche 1 bis 11, **dadurch gekennzeichnet, daß** die Sitzleisten (3) auf der Innenseite Aussparungen aufweisen, die mit dem darin aufgenommenen Sitz (5) im zusammengeklappten Zustand eine gegenseitige Anlage der Schlittenrahmen (4) ermöglichen.

13. Klappschlitten nach einem der Ansprüche 1 bis 12, **dadurch gekennzeichnet, daß** die Schlittenrahmen (4) und/ oder die Querstreben (6) aus Kunststoffbestehen.

## Claims

1. Folding sledge comprising two lateral sledge frames (4), each having a runner (2) and a seat strip (3) which are arranged at an angle to one another and are coupled by a seat (5) and two traverses (6), which are rotatably connected to the sledge frames (4) about a right-hand axis of rotation (7) and a left-hand axis of rotation (8) and have a hinge (9) with a hinge axis (10), wherein the right-hand axis of rotation (7) related to a traverse (6) and left-hand axis of rotation (8) lie in one plane, **characterized in that** the axes of rotation (7 or 8) each associated with a sledge frame (4) are not parallel to one another.

2. Folding sledge according to Claim 1, **characterized in that** no axis of rotation (7, 8) is parallel to one of the other axes of rotation (7, 8).

3. Folding sledge according to Claim 2, **characterized in that** the left-hand axes of rotation (8) or the right-hand axes of rotation (7) lie in one plane and run at an angle to one another.

4. Folding sledge according to Claim 3, **characterized in that** the left-hand axes of rotation (8) or the right-hand axes of rotation (7) in the plane of the sledge frame (4) include an angle of between 40° and 140°.

5. Folding sledge according to any one of Claims 1 to 4, **characterized in that** means are provided for locking the swivel of the axes of rotation (7, 8) and/or the hinge axis (10) of at least one of the traverses (6) when in the unfolded state.

6. Folding sledge according to Claim 5, **characterized in that** the means for locking are formed by the seat (5) consisting of two rigid seat halves (11), which are joined in an articulated manner to the seat strips (3) and connected via a seat hinge (12) parallel to the longitudinal direction of the sledge frames (4).

7. Folding sledge according to Claim 5 or 6, **characterized in that** the means for locking comprise snap connections or clamp connections, which with positive fit prevent rotation of the sledge parts coupled to one another in an articulated manner via the axes of rotation (7, 8) or the hinge axes (10).

8. Folding sledge according to any one of Claims 5 to 7, **characterized in that** the means for locking comprise a spring element (15), which actuated thereby counteracts rotation of the sledge parts coupled to one another in an articulated manner via the axes of rotation (7, 8) or the hinge axes (10).

9. Folding sledge according to Claim 8, **characterized in that** the hinge axis (10) of one of the traverses (6) is parallel to and outside the plane defined by the related axes of rotation (7, 8), **in that** the spring element (15) is arranged on the side of the plane located opposite the hinge axis (10) and is connected to the two parts of the traverse (6) at contact points (17), and **in that** between the contact points (17) free spaces (16) are cut in the two parts of the traverse (6).

10. Folding sledge according to any one of Claims 6 to 9, **characterized in that** the traverses (6), in the unfolded state, lie against the seat (5) in a supporting manner.

11. Folding sledge according to Claim 9 or 10, **characterized in that** the seat halves (11), in the folded together state, lie between the parts of the traverses (6).

12. Folding sledge according to any one of Claims 1 to 11, **characterized in that** the seat strips (3) have recesses on the inside, which with the seat (5) held therein, in the folded together state, permits cross-contact of the sledge frames (4).

13. Folding sledge according to any one of Claims 1 to 12, **characterized in that** the sledge frames (4) and/or the traverses (6) are made of plastics material.

## Revendications

1. Luge pliante comportant deux cadres de luge (4) comprenant respectivement un patin (2) et une barre de siège (3), agencés de façon inclinée l'un vers l'autre et couplés par un siège (5) et deux traverses (6) et reliés aux cadres de luge (4) de façon mobile autour d'un axe de rotation droit (7) et d'un axe de rotation gauche (8) et présentant une charnière (9) avec un axe à charnière (10), l'axe de rotation droit (7) associé à une traverse (6) et l'axe de rotation gauche (8) se situant dans un plan, **caractérisée en ce que** les axes de rotation (7 ou 8) associés respectivement à un cadre de luge (4) ne sont pas orientés parallèlement l'un à l'autre.

2. Luge pliante selon la revendication 1, **caractérisée en ce qu'**il n'y a pas d'axe de rotation (7, 8) qui soit orienté parallèlement à un autre des axes de rotation (7, 8).

3. Luge pliante selon la revendication 2, **caractérisée en ce que** les axes de rotation gauche (8) ou les axes de rotation droit (7) se situent dans un plan et s'étendent de manière inclinée l'un vers l'autre.

4. Luge pliante selon la revendication 3, **caractérisée en ce que** les axes de rotation gauche (8) ou les axes de rotation droit (7) comprennent un angle entre 40° et 140° dans le plan du cadre de luge (4).

5. Luge pliante selon l'une quelconque des revendications 1 à 4, **caractérisée en ce que** des moyens de blocage de la position de rotation des axes de rotation (7, 8) et/ou de l'axe à charnière (10) d'au moins l'une des traverses (6) sont prévues à l'état déplié.

6. Luge pliante selon la revendication 5, **caractérisée en ce que** les moyens de blocage sont formés par le siège (5) composé de deux moitiés de siège rigides (11) et sont raccordés de manière articulée aux barres de siège (3) et reliés par une charnière de siège (12) orientée parallèlement à la direction longitudinale des cadres de luge (4).

7. Luge pliante selon la revendication 5 ou 6, **caractérisée en ce que** les moyens de blocage comprennent des assemblages à encliquetage ou des assemblages par serrage qui empêchent par complémentarité de forme une rotation des parties de luge couplées entre elles de manière articulée par les axes de rotation (7, 8) ou les axes à charnière (10).

8. Luge pliante selon l'une quelconque des revendications 5 à 7, **caractérisée en ce que** les moyens de blocage comprennent un élément ressort (15) qui agit en sens contraire par complémentarité de forme d'une rotation des parties de luge couplées entre elles de manière articulée par les axes de rotation (7, 8) ou les axes à charnière (10).

9. Luge pliante selon la revendication 8, **caractérisée en ce que** l'axe à charnière (10) de l'une des traverses (6) se situe parallèlement et en dehors du plan défini par les axes de rotation associés (7, 8), **en ce que** l'élément ressort (15) est agencé sur le côté du plan opposé à l'axe à charnière (10) et est relié au niveau des points de contact (17) aux deux parties de la traverse (6), et **en ce que** des découpes libres (16) sont formées dans les deux parties de la traverse (6) entre les points de contact (17).

10. Luge pliante selon l'une quelconque des revendications 6 à 9, **caractérisée en ce que** les traverses (6) sont adjacentes au siège (5) de manière à le soutenir à l'état déplié.

11. Luge pliante selon la revendication 9 ou 10, **caractérisée en ce que** les moitiés de siège (11) se situent entre les parties des traverses (6) à l'état replié.

12. Luge pliante selon l'une quelconque des revendications 1 à 11, **caractérisée en ce que** les barres de siège (3) présentent des évidements sur le côté intérieur qui permettent un appui mutuel des cadres de luge (4) avec le siège (5) logé dans lesdits évidements à l'état replié.

13. Luge pliante selon l'une quelconque des revendications 1 à 12, **caractérisée en ce que** les cadres de luge (4) et/ou les traverses (6) sont constitués de matière synthétique.
